Europäisches Patentamt

(19) European Patent Office

Office européen des brevets

(11) Numéro de publication: **0 276 617 B1**

(12) **FASCICULE DE BREVET EUROPEEN**

(45) Date de publication de fascicule du brevet:
**12.06.91**

(51) Int. Cl.⁵: **G02B 5/10**

(21) Numéro de dépôt: **87403005.9**

(22) Date de dépôt: **29.12.87**

(54) **Miroir ultra-léger et procédé pour le fabriquer.**

(30) Priorité: **30.12.86 FR 8618339**

(43) Date de publication de la demande:
**03.08.88 Bulletin 88/31**

(45) Mention de la délivrance du brevet:
**12.06.91 Bulletin 91/24**

(84) Etats contractants désignés:
**DE FR GB IT**

(56) Documents cités:
**EP-A- 0 165 703**
**FR-A- 2 215 631**
**US-A- 3 912 380**
**US-A- 4 463 055**

**LASER FOCUS, no. 36, avril 1985, pages 40,42, Newton, US; W. ERNST: "Fiber-reinforced plastics form low-mass mirrors for space"**

**IBM TECHNICAL DISCLOSURE BULLETIN, vol. 20, no. 12, mai 1978, page 5121, New York, US; T. KETTLING: "Honeycomb mirror"**

(73) Titulaire: **SOCIETE DE FABRICATION D'INS-TRUMENTS DE MESURE (S.F.I.M.)**
**13, avenue Marcel Ramolfo-Garnier**
**F-91344 Massy Cédex(FR)**

(72) Inventeur: **Ducassou, Didier**
**26, Résidence les Rieux**
**F-91120 Palaiseau(FR)**

(74) Mandataire: **Schrimpf, Robert et al**
**Cabinet Regimbeau 26, Avenue Kléber**
**F-75116 Paris(FR)**

## Description

L'invention concerne un miroir ultra-léger et sa fabrication. Il est connu de fabriquer un miroir allégé en fixant des plaques sur un noyau en nid d'abeilles et en réalisant un dépôt réfléchissant sur l'une des plaques (IBM Technical Disclosure Bulletin, vol. 20, N° 12, mai 1978, page 5121 ; Brevet US 3 912 380).

Il est également connu de réaliser un corps de miroir au moyen d'un empilage de couches contenant des fibres unidirectionnelles dans un liant, ledit empilage étant rendu unitaire par un traitement thermique (EP-A-165703). La surface réfléchissante est constituée dans ce cas d'une surface en verre ou en verre-céramique et le problème se pose de réaliser une bonne liaison entre cette surface et le corps du miroir.

La présente invention vise à fabriquer un miroir ultra-léger présentant des qualités mécaniques améliorées, notamment en ce qui concerne la rigidité, évitant les difficultés des techniques antérieures.

On y parvient, selon l'invention, par un procédé tel que défini dans la revendication 1.

De préférence, on détermine les orientations des fibres dans les différentes couches de façon à augmenter le module de cisaillement et d'élasticité de l'empilage et/ou on détermine les orientations des fibres dans les différentes couches de façon à diminuer le coefficient de dilatation de l'empilage.

On décrira ci-après un exemple de mise en oeuvre de l'invention, en référence aux figures du dessin joint sur lequel :
- la figure 1 est une perspective schématique d'un substrat alvéolaire pour constituer l'âme du miroir ;
- la figure 2 est un schéma de principe montrant les orientations des fibres dans les couches successives ;
- la figure 3 est un schéma d'un dispositif utilisé pour polymériser l'empilage des couches ;
- la figure 4 est un schéma d'un dispositif utilisé pour coller l'empilage sur le substrat alvéolaire ;
- la figure 5 est une perspective schématique d'un substrat modifié, et
- la figure 6 montre des formes de miroir que l'on peut fabriquer en suivant le procédé de l'invention.

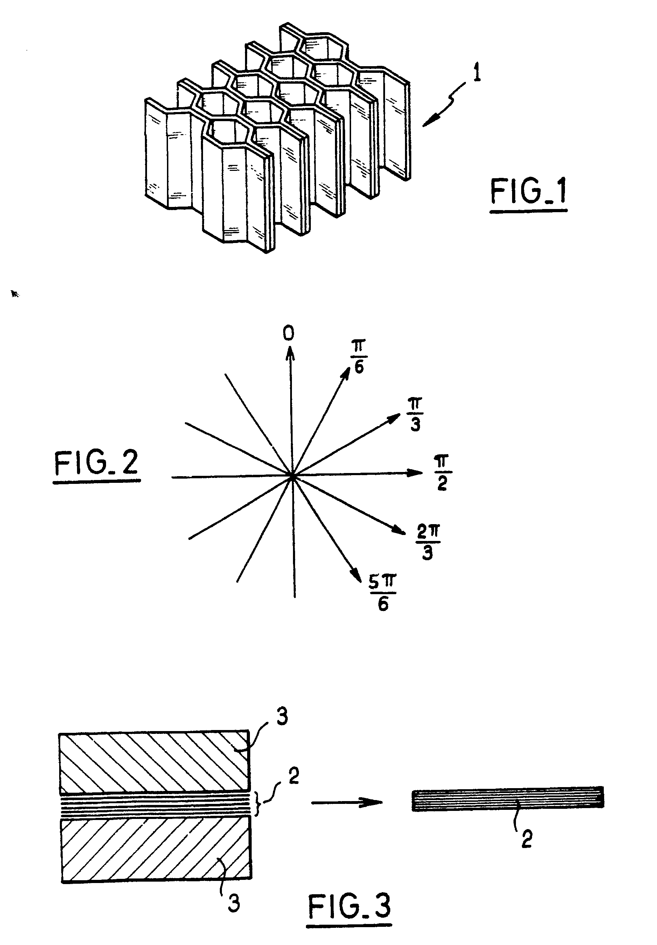

La figure 1 montre une structure alvéolaire 1 (de préférence à alvéoles hexagonaux communément appelée nid d'abeille) métallique ou en tout autre matériau apte à assurer une rigidité convenable.

On fixe sur chacune des deux grandes faces opposées de cette structure un empilage 2,2' que l'on a constitué en empilant des couches de fibres à haut module d'élasticité (ou tout au matériau filamentaire) préimprégnés de résine. Les fibres de chaque couche sont orientées suivant une même direction et on choisit les orientations des fibres des différentes couches en sorte que le coefficient de dilatation dans le plan soit minimal et son module d'élasticité maximal.

De préférence, les orientations des fibres des différentes couches varient comme $K\frac{\pi}{n}$, K prenant toutes les valeurs entières de 0 à n - 1 une fois et une fois seulement, et n étant le nombre de couches (figure 2).

La face externe de l'empilage est constituée de fibres unidirectionnelles métallisées destinées à jouer le rôle d'électrode.

Les deux empilages sont polymérisés entre deux plaques d'acier parallèles, polies optiquement et traitées antiadhérentes, sous une presse à plateaux chauffants (3) rigoureusement parallèles (figure 3).

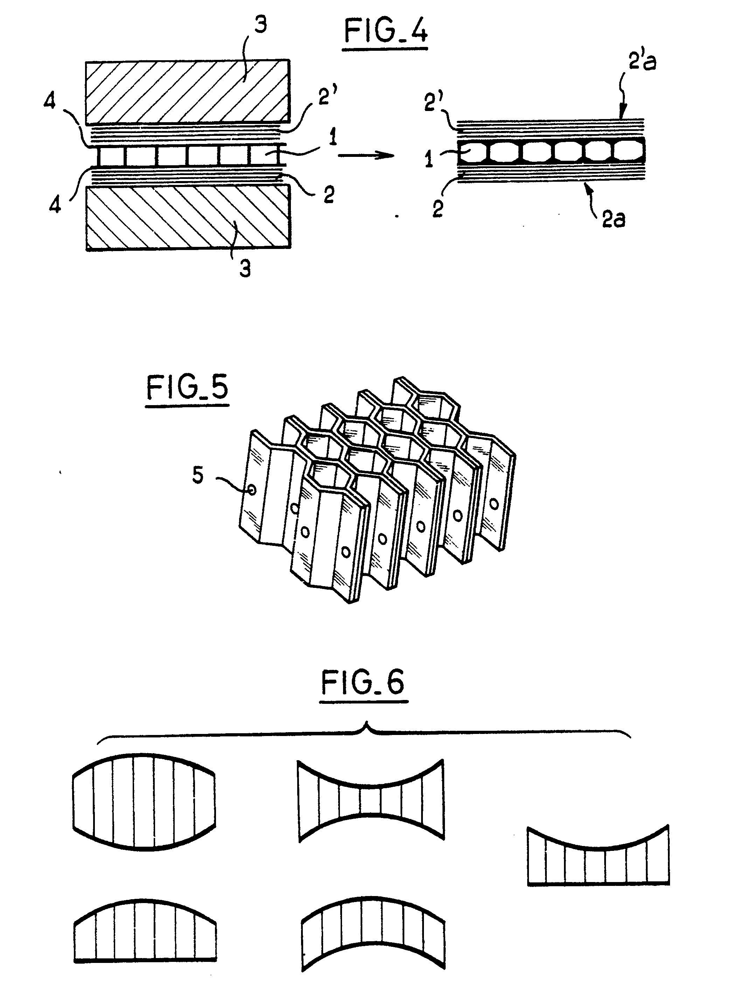

Après polymérisation complète des deux empilages, ceux-ci sont contre collés sur le substrat allégé par un film adhésif 4 (type REDUX de chez CIBA GEIGY) polymérisable sous presse à plateaux chauffants 3 (figure 4).

On réalise ensuite sur la face externe de l'un des empilages un revêtement métallique d'épaisseur suffisante pour pouvoir être poli jusqu'à présenter la planéité désirée.

La métallisation s'effectue par voie életrolytique, les faces externes 2a,2'a contenant des fibres métallisées aptes à jouer le rôle d'électrode.

La face réfléchissante peut être fournie directement par le dépôt métallique poli réalisé sur l'empilage ou par un revêtement métallique supplémentaire, par exemple d'argent, d'aluminium ou d'or, réalisé par exemple par évaporation sous vide, sur le dépôt métallique poli, s'il n'est pas possible d'obtenir le facteur de réflexion souhaité avec le dépôt métallique poli.

Enfin, on réalise, si désiré, un dépôt de protection tel qu'habituellement utilisé sur des surfaces optiques (du genre SiO, MgF2, etc...)

Toutes les opérations de métallisation sont menées de telle sorte que la température du miroir ne dépasse pas les caractéristiques mécaniques limites des matériaux contre-collés.

Pour des applications avec des variations de pression, l'utilisation de structure alvéolaire avec alvéoles communicants par perçage de trous 5 (figure 5) peut être nécessaire. Ces trous seront bouchés temporairement pendant les traitements de métallisation.

L'invention n'est pas limitée à l'utilisation de fibres particulières aptes à être métallisées pour constituer une électrode : on utilise de préférence des fibres en carbone mais, dans des variantes, on utilise d'autres fibres comme les fibres de Kevlar, de Verre, de céramique, de silice pure, de bore.

La face réfléchissante peut subir un traitement multi-couches.

**Revendications**

1. Procédé pour fabriquer un miroir ultra-léger de bonnes caractéristiques mécaniques, dans lequel on réalise un empilage de couches constituées de fibres unidirectionnelles dans un liant, on applique un traitement thermique pour assurer la cohésion de l'empilage et dans lequel on réalise une surface réfléchissante sur l'empilage, caractérisé en ce qu'on réalise un empilage de couches constituées de fibres unidirectionnelles imprégnées d'une résine polymérisable, des fibres métallisées étant incorporées dans la dernière couche de l'empilage, on polymérise la résine par chauffage avec application d'une pression, on applique et on fixe un tel empilage sur l'une au moins de deux faces opposées d'une âme en structure alvéolaire, on utilise lesdites fibres métallisées comme électrodes pour réaliser par voie électrolytique sur la couche externe de l'empilage un revêtement métallique dont on complète éventuellement l'épaisseur, et on polit la face externe de ce revêtement.

2. Procédé selon la revendication 1, caractérisé en ce qu'on choisit les orientations des fibres dans les différentes couches de façon à augmenter le module de cisaillement et d'élasticité de l'empilage.

3. Procédé selon la revendication 1, caractérisé en ce qu'on choisit les orientations des fibres dans les différentes couches de façon à diminuer le coefficient de dilatation de l'empilage.

4. Procédé selon la revendication 1, caractérisé en ce que les orientations des fibres des différentes couches varient comme $K\frac{\pi}{n}$, K prenant toutes les valeurs entières de 0 à n - 1 une fois et une fois seulement, et n étant le nombre de plis.

5. Procédé selon l'une des revendications 1 à 4, caractérisé en ce qu'on choisit les fibres parmi les fibres à haut module d'élasticité, comme les fibres de carbone, de Kevlar, de verre, de céramique, de silice pure, de bore.

6. Procédé selon la revendication 1 ou 2, caractérisé en ce qu'on polymérise l'empilage sous une presse à plateaux chauffants (3,3') rigoureusement parallèles.

7. Procédé selon l'une des revendications 1 à 6, caractérisé en ce qu'on utilise un film adhésif polymérisable pour coller l'empilage polymérisé sur la structure alvéolaire et en ce qu'on réalise ce collage sous une presse à plateaux chauffants.

8. Procédé selon la revendication 1, caractérisé en ce que pour obtenir une surface réfléchissante, on réalise une métallisation sur le revêtement métallique poli.

9. Procédé selon la revendication 1, caractérisé en ce qu'on réalise une surface réfléchissante par dépôt ionique d'un métal.

10. Procédé selon l'une des revendications 1 à 9, caractérisé en ce qu'on utilise une structure alvéolaire (1) en nid d'abeilles.

11. Procédé selon l'une des revendications 1 à 10, caractérisé en ce qu'on fixe un tel empilage sur chacune des deux faces opposées de la structure alvéolaire.

12. Miroir ultra-léger de bonnes caractéristiques mécaniques, comprenant un empilage de couches contenant des fibres unidirectionnelles et une surface réfléchissante réalisée sur l'empilage, caractérisé en ce que l'empilage est constitué de couches de résine polymérisée et est fixé sur une face au moins d'une âme en structure alvéolaire, en ce que les fibres de la dernière couche comprennent des fibres métallisées et en ce qu'un revêtement métallique électrolytique a été formé sur la dernière couche et poli.

13. Miroir ultra-léger selon la revendication 12, caractérisé en ce que les fibres font partie du groupe constitué par les fibres de carbone, de Kevlar, de verre, de céramique, de silice pure, de bore.

14. Miroir selon la revendication 12 ou 13, caractérisé en ce que les orientations des fibres sont différentes d'une couche à l'autre.

15. Miroir ultra-léger selon la revendication 14, caractérisé en ce que les orientations des fibres des différentes couches varient comme $K\frac{\pi}{n}$, K prenant toutes les valeurs entières de 0 à n - 1 une fois et une fois seulement, et n'étant le nombre de couches.

**Claims**

1. Process for manufacturing an ultra-light mirror having good mechanical characteristics in which a stack of layers comprising unidirectional fibres in a binder is constructed, a thermal treatment is applied to ensure cohesion of the stack, and in which a reflective surface is constructed on the stack, characterized in that a stack of layers comprising unidirectional fibres impregnated with a polymerizable resin is constructed, metallized fibres being incorporated in the last layer of the stack, the resin is polymerized by heating under pressure, such a stack is applied and fixed on at least one of the two opposing surfaces of a core with a honey-comb structure, the said metallized fibres are used as electrodes in order to achieve a metallic coating on the external layer of the stack by electrolytic means, the thickness of the metallic coating possibly being completed and the external surface of this coating being polished.

2. Process according to Claim 1, characterized in that the orientation of fibres in the different layers is chosen so as to increase the modulus of rigidity and of elasticity of the stack.

3. Process according to Claim 1, characterized in that the orientation of fibres in the different layers is chosen so as to reduce the coefficient of expansion of the stack.

4. Process according to Claim 1, characterized in that the orientation of fibres of the different layers varies as $K\pi/n$, K having all the integer values from 0 to n - 1 once and once only, and n being the number of plies.

5. Process according to one of Claims 1 to 4, characterized in that the fibres are chosen to be fibres having a high modulus of elasticity, such as fibres of carbon, Kevlar, glass, ceramic, pure silica, boron.

6. Process according to Claim 1 or 2, characterized in that the stack is polymerized under a press with heated plates (3, 3') which are exactly parallel.

7. Process according to one of Claims 1 to 6, characterized in that an adhesive polymerizable film is used to stick the polymerized stack on the honey-comb structure and in that this sticking is carried out under a press with heated plates.

8. Process according to Claim 1, characterized in that in order to obtain a reflective surface metallization is carried out on the polished metallic coating.

9. Process according to Claim 1, characterized in that a reflective surface is achieved by depositing metal ions.

10. Process according to one of Claims 1 to 9, characterized in that a honey-comb structure (1) in alveolar form is used.

11. Process according to one of Claims 1 to 10, characterized in that such a stack is fixed on each of the two opposing surfaces of the honey-comb structure.

12. Ultra-light mirror having good mechanical characteristics, comprising a stack of layers containing unidirectional fibres and a reflective surface made on the stack, characterized in that the stack comprises layers of polymerized resin and is fixed on a face at least of a core with a honey-comb structure, the fibres of the last layer comprise metallized fibres and in that an electrolytic metallic coating has been formed on the last layer and polished.

13. Ultra-light mirror according to Claim 12, characterized in that the fibres form part of the group made up by the fibres of carbon, Kevlar, glass, ceramic, pure silica, boron.

14. Mirror according to Claim 12 or 13, characterized in that the orientation of fibres is different from one layer to the next.

15. Ultra-light mirror according to Claim 14, characterized in that the orientation of fibres of the different layers varies as $K\pi/n$, K having all the integer values from 0 to n - 1 once and once only, and n being the number of layers.

**Ansprüche**

1. Verfahren zum Herstellen eines ultraleichten Spiegels mit guten mechanischen Eigenschaften, bei dem man einen Stapel aus Schichten aus einheitlich ausgerichteten Fasern in einem Bindemittel schafft, eine thermische Behandlung zum Gewährleisten der Kohäsion des Stapels anwendet und eine reflektierende Oberfläche auf dem Stapel bildet, dadurch **gekennzeichnet,** daß man den Stapel aus den Schichten mit den einheitlich ausgerichteten Fasern mit einem polymerisierbaren Harz imprägniert, wobei man metallisierte Fasern in die letzte Schicht des Stapels einbettet, daß man das Harz durch Heizen unter Druckanwendung polymerisiert, daß man einen solchen Stapel mindestens auf einer von zwei gegenüberliegenden Seiten mit einer Seele einer Wabenstruktur bedeckt und verbindet, daß man die genannten metallisierten Fasern als Elektroden zum elektrolytischen Erzeugen auf einer Außenfläche des Stapels eines metallischen Überzuges benutzt, dessen Dicke man gegebenenfalls komplettiert, und daß man die äußere Oberfläche des Überzuges poliert.

2. Verfahren nach Anspruch 1, dadurch **gekennzeichnet,** daß man die Orientierungen der Fasern in den verschiedenen Schichten derart wählt, daß der Schubmodul und der Elastizitätsmodul des Stapels erhöht werden.

3. Verfahren nach Anspruch 1, dadurch **gekennzeichnet,** daß man die Orientierungen der Fasern in den verschiedenen Schichten derart wählt, daß der Dehnungskoeffizient des Stapels vermindert wird.

4. Verfahren nach Anspruch 1, dadurch **gekennzeichnet,** daß die Orientierungen der Fasern in den verschiedenen Schichten wie $K \frac{\pi}{n}$ variiert, wobei K alle ganzzahligen Werte zwischen 0 und n-1 ein- und nur einmal annehmen kann, während n die Anzahl der Schichten darstellt.

5. Verfahren nach einem der Ansprüche 1 bis 4, dadurch **gekennzeichnet,** daß man die Fasern aus der Gruppe mit hohem Elastizitätsmodul, wie Fasern aus Kohle, Kevlar, Glas, Keramik, reinem Silicium und Bor auswählt.

6. Verfahren nach Anspruch 1 oder 2, dadurch **gekennzeichnet,** daß man den Stapel in einer Presse mit exakt parallelen Heizplatten (3, 3') polymerisiert.

7. Verfahren nach einem der Ansprüche 1 bis 6, dadurch **gekennzeichnet,** daß man einen polymerisierbaren Haftfilm zum Kleben des polymerisierten Stapels auf eine Zellenstruktur verwendet und die Klebung in einer Presse mit Heizplatten vornimmt.

8. Verfahren nach Anspruch 1, dadurch **gekennzeichnet,** daß man zum Erhalten einer reflektierenden Oberfläche eine Metallisierung auf einem polierten metallischen Überzug vornimmt.

9. Verfahren nach Anspruch 1, dadurch **gekennzeichnet,** daß man eine reflektierende Oberfläche durch Ionenablagerung eines Metalls erzeugt.

10. Verfahren nach einem der Ansprüche 1 bis 9, dadurch **gekennzeichnet,** daß man eine Zellenstruktur (1) in Gestalt eines Bienenwabenmusters verwendet.

11. Verfahren nach einem der Ansprüche 1 bis 10, dadurch **gekennzeichnet,** daß man einen solchen Stapel auf jeder von zwei gegenüberliegenden Seiten mit einer Zellenstruktur fest verbindet.

12. Ultraleichter Spiegel mit guten mechanischen Eigenschaften, umfassend einen Stapel aus Schichten enthaltend einheitlich ausgerichtete Fasern und eine reflektierende Oberfläche auf dem Stapel, dadurch **gekennzeichnet,** daß der Stapel von einer Schicht aus polymerisiertem Harz gebildet und mit einer Oberfläche mindestens einer Seele mit Zellenstruktur befestigt ist, daß die Fasern der letzten Schicht metallisierte Fasern umfassen und daß ein metallischer, elektrolytisch aufgebrachter Überzug auf der letzten Schicht ausgebildet und poliert ist.

13. Ultraleichter Spiegel nach Anspruch 12, dadurch **gekennzeichnet,** daß die Fasern aus der Gruppe mit Kohlefasern, Kevlar-Fasern, Glasfasern, keramischen Fasern, Reinsiliciumfasern und Borfasern ausgewählt sind.

14. Spiegel nach Anspruch 12 oder 13, dadurch **gekennzeichnet,** daß die Orientierungen der Fasern in jeder Schicht unterschiedlich sind.

15. Ultraleichter Spiegel nach Anspruch 14, dadurch **gekennzeichnet,** daß die Orientierungen der Fasern in den verschiedenen Schichten wie $K \frac{\pi}{n}$ variieren, wobei K sämtliche ganzzahligen Werte zwischen 0 und n-1 ein- und nur einmal annimmt und n die Anzahl der Schichten ist.

FIG_1

FIG_2

FIG_3

FIG_4

FIG_5

FIG_6